# EUROPEAN PATENT SPECIFICATION

(11) **EP 3 619 914 B1**
(45) Date of publication and mention of the grant of the patent: **25.05.2022**
(21) Application number: 18798121.2
(22) Date of filing: 09.05.2018
(51) Int. Cl.: H04N 19/157, H04N 19/109, H04N 19/11, H04N 19/176, H04N 19/52

(54) **DEVICES AND METHODS FOR VIDEO PROCESSING**
VORRICHTUNGEN UND VERFAHREN ZUR VIDEOVERARBEITUNG
DISPOSITIFS ET PROCÉDÉS DE TRAITEMENT VIDÉO

(30) Priority: 09.05.2017 US 201762503775 P; 28.12.2017 US 201715856246
(43) Date of publication of application: 11.03.2020
(73) Proprietor: Huawei Technologies Co., Ltd., Longgang District Shenzhen, Guangdong 518129 (CN)
(72) Inventor: LIU, Shan, San Jose, CA 95125 (US); ZHAO, Yin, Hangzhou Zhejiang 310051 (CN)
(74) Representative: Körber, Martin Hans
(86) International application number: PCT/CN2018/086207
(87) International publication number: WO 2018/205958

(56) References cited:
- WO-A1-2015/099488
- US-A1- 2013 016 787
- US-A1- 2013 128 954
- US-A1- 2013 279 582
- US-A1- 2013 287 116
- US-A1- 2014 185 688
- US-A1- 2016 373 688
- US-A1- 2016 373 744
- SEREGIN V ET AL: "Neighbor based intra most probable modes list derivation", 3. JVET MEETING; 26-5-2016 - 1-6-2016; GENEVA; (THE JOINT VIDEO EXPLORATION TEAM OF ISO/IEC JTC1/SC29/WG11 AND ITU-T SG.16 ), no. JVET-C0055, 17 May 2016 (2016-05-17), XP030150153,

## Description

### TECHNICAL FIELD

The present disclosure relates to the image compression field, and in particular, to devices and methods for video processing.

### BACKGROUND

In the image compression field, prediction techniques have been widely investigated over the last decades for image and video compression.

A digital video sequence is a temporal succession of digital images, also referred to as pictures or frames, which usually presents a significant amount of temporal and spatial correlations. Prediction methods may play an important role in image and video coding standards, due to their ability to reduce the signal redundancy based on the previously encoded samples. The main prediction techniques include the intra directional prediction for efficient spatial redundancy coding and the motion-compensated prediction for inter-frame temporal redundancy coding.

However, as the demand for higher resolutions, more complex graphical content, and faster transmission time increases, so does the need for better video processing methods.

US20130287116 A1 discloses a decoder configured to decode a bit stream signaling one of supported partitioning patterns for a current block of a picture, the decoder being configured to if the signaled one of the supported partitioning patterns specifies a subdivision of the current block into two or more block partitions, remove for each of the block partitions except a first block partition of the bock partitions of the current block in a coding order, from a set of coding parameter candidates for the respective block partition, coding parameter candidates which equal coding parameters associated with any of the block partitions.

US20130279582 A1 discloses a moving image encoding device in which when a coding mode selected by an encoding controlling unit is an intra prediction mode, a prediction image generating unit carries out an intra-frame prediction process using pixels adjacent to each coding block which is generated through a division by a block dividing unit or pixels adjacent to a higher layer coding block to which each coding block belongs to generate a prediction image.

SEREGIN V ET AL: "Neighbor based intra most probable modes list derivation" 3. JVET MEETING; 26-5-2016-1-6-2016; GENEVA; (THE JOINT VIDEO EXPLORATION TEAM OF ISO/IEC JTC1/SC29/WG11 AND ITU=T SG.16), no. JVET-C0055, 17 May 2016 (2016-05-17), XP030150153 discloses intra mode coding with modified most probable mode list derivation, in which intra prediction modes of the already coded neighbor blocks are included into the list in a way similar to building a merge motion vector candidate list.

### SUMMARY

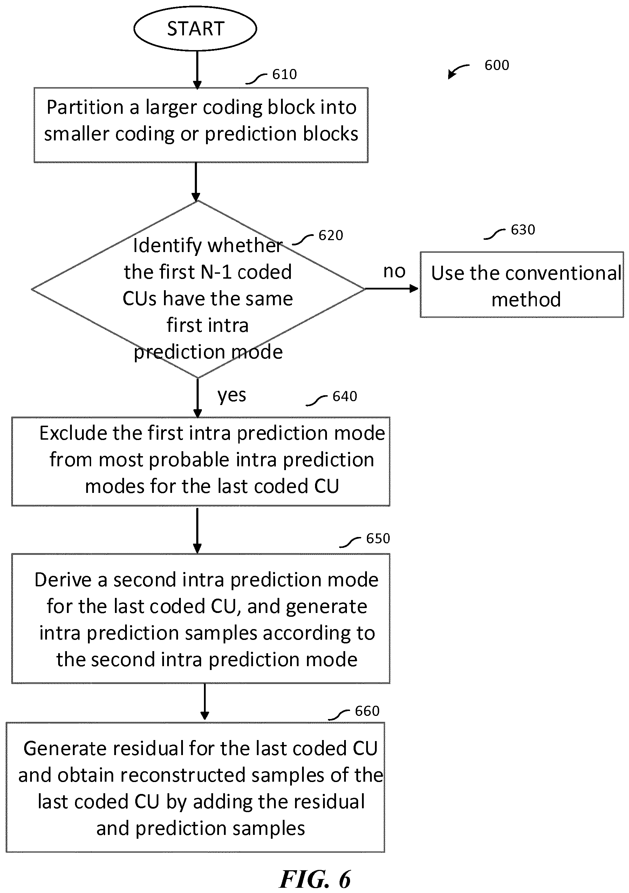

The present invention is defined by the independent claims. Additional features of the invention are provided in the dependent claims. Enabling disclosure for the protected invention is provided with the embodiments disclosed in relation to figure 6. Remaining aspects, examples or embodiments, unless disclosed in combination with all the features of an independent claim, are not presented as embodiments of the invention, but as examples useful for understanding the invention. This disclosure describes devices and methods for video processing. In one embodiment, a predictive decoding method performed by a decoder is provided. The method includes the following steps: receiving a coding block from an encoder; partitioning the coding block into N coding unites (CUs) based on coding tree information; identifying whether first N-1 CUs have same prediction information; and excluding the prediction information from a merging candidate list or a probable intra prediction mode list for N^{th} CU when the first N-1 CUs have same prediction information.

In another embodiment, a decoder device, includes a non-transitory memory storage comprising instructions; and one or more processors in communication with the memory. The one or more processors executes the instructions to: receive a coding block from an encoder; partition the coding block into N coding unites (CUs) based on coding tree information; identify whether first N-1 CUs have same prediction information; and exclude the prediction information from a merging candidate list or a probable intra prediction mode list for N^{th} CU when the first N-1 CUs have same prediction information.

In other embodiments, a non-transitory computer-readable medium storing computer instructions, that when executed by one or more processors, cause the one or more processors to: receive a coding block from an encoder; partition the coding block into N coding unites (CUs) based on coding tree information; identify whether first N-1 CUs have same prediction information; and exclude the prediction information from a merging candidate list or a probable intra prediction mode list for N^{th} CU when the first N-1 CUs have same prediction information.

In other embodiments, a video processing system is provided. The video processing system includes an encoder being configured to send a coding block to a decoder; and the decoder, being configured to: receive the coding block from the encoder; partition the coding block into N coding unites (CUs) based on coding tree information; identify whether first N-1 CUs have same prediction information; and exclude the prediction information from a merging candidate list or a probable intra prediction mode list for N^{th} CU when the first N-1 CUs have same prediction information.

By considering the prediction information of first N-1 coding when deciding a merging candidate list or a probable intra prediction mode list for the N^{th} CU, this disclosure increase the accuracy of image prediction for the last coding or prediction block.

### BRIEF DESCRIPTION OF DRAWINGS

To describe the technical solutions in the embodiments of the present disclosure more clearly, the following briefly describes the accompanying drawings required for describing the embodiments.
FIG. 1A is a schematic diagram illustrating a quad-tree (QT) split according to an embodiment of the present disclosure;
FIG. 1B is a schematic diagram illustrating a binary tree (BT) split in vertical orientation according to an embodiment of the present disclosure;
FIG. 1C is a schematic diagram illustrating a binary tree (BT) split in horizontal orientation according to an embodiment of the present disclosure;
FIG. ID is a schematic diagram illustrating a triple tree (TT) split in vertical orientation according to an embodiment of the present disclosure;
FIG. IE is a schematic diagram illustrating a triple tree (TT) split in horizontal orientation according to an embodiment of the present disclosure;
FIG. 2 is a schematic diagram illustrating 33 directional modes for intra prediction;
FIG. 3 is a schematic diagram illustrating inter prediction;
FIG. 4 is a schematic diagram illustrating merging candidate selection process ;
FIG. 5A is a schematic diagram illustrating "T-shape" partition according to an embodiment of the present disclosure;
FIG. 5B is a schematic diagram illustrating "multiple row" partition according to an embodiment of the present disclosure;
FIG. 6 is a flowchart to compress/decompress the last coding or prediction block according to an embodiment of the present disclosure;
FIG. 7 is a flowchart to compress/decompress the last coding or prediction block according to an embodiment of the present disclosure; and
Fig. 8 is a block diagram of a network element 800 that can be used to implement various embodiments.

### DETAILED DESCRIPTION

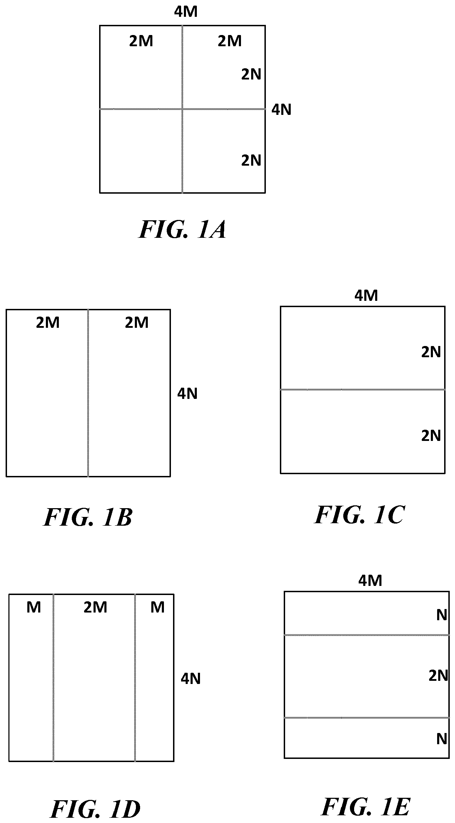

The present disclosure relates to video coding. FIGS. 1A-1E illustrate various tree splits. FIG. 1A illustrates a block partitioning structure by adopting a quad-tree (QT) split. The QT is a tree structure for block partitioning in which a node of size 4Mx4N may be split into four child nodes of size 2Mx2N. FIG. 1B illustrates a block partitioning structure by adopting a binary tree (BT) split in vertical orientation. FIG. 1C illustrates a block partitioning structure by adopting a binary tree (BT) split in horizontal orientation. The BT is a tree structure for block partitioning in which a node of size 4Mx4N may either be horizontally split into two child nodes of size 4Mx2N or vertically split into two child nodes of size 2Mx4N. FIG. ID illustrates a block partitioning structure by adopting a triple tree (TT) split in vertical orientation. FIG. IE illustrates block partitioning structure by adopting a triple tree (TT) split in horizontal orientation. The TT is a tree structure for block partitioning in which a node of size 4Mx4N may either be horizontally split into three child nodes of size 4MxN, 4Mx2N and 4MxN, respectively; or vertically split into three child nodes of size Mx4N, 2Mx4N and Mx4N, respectively. Among the three child nodes shown in FIG. ID or FIG. IE, the largest node is positioned in the center.

Quad-tree plus binary tree (QTBT) is a quad-tree plus binary tree structure in which a block is first partitioned using quad-tree split, then each quad-tree child node may be further partitioned using binary tree split. Quad-tree plus binary tree or triple tree (QT-BT/TT) is a quad-tree plus binary tree or triple tree structure in which a block is first partitioned using quad-tree split, then each quad-tree child node may be further partitioned using binary tree or triple tree split.

In video coding based on QT, QTBT, QT-BT/TT block partitioning structure, a coding or prediction block in depth K may be split into N smaller coding or prediction blocks in depth K+1 by a BT, TT or QT split, where N=2, 3, or 4, respectively. If all of the smaller blocks in depth K+1 are leaf nodes (i.e., leaf nodes are the smaller blocks that cannot be further split) and the first N-1 coding blocks in depth K+1 have the same prediction information, the last smaller block is more likely to have different prediction information.

Disclosed herein is a method of block information sharing in video coding. If all of the smaller coding block or prediction block in depth K+1 are leaf nodes and the first N-1 coding blocks in depth K+1 have the same (or similar with difference less than a small threshold) prediction information, the prediction information of the first N-1 coding blocks is not allowed to be used for the last coding block in depth K+1; or, is excluded from the most probable intra prediction modes of the last coding block if the last block is intra coded, or from the merging candidate list of the last coding block if the last coding block is inter coded. As a result, signaling bits of prediction information for the last coding block in depth K+1 may be reduced. The accuracy of image prediction for the last coding or prediction block is increased. The prediction information includes one or more intra prediction modes, where the intra prediction modes includes DC mode, planar mode and angular prediction modes. The prediction information includes inter prediction information, where the inter prediction information includes inter prediction direction, reference frame index and motion vector information.

There are two approaches to realize excluding the prediction information of the first N-1 coding blocks to be used for the last coding block. If during generating a merging candidate list or a probable intra prediction mode list for N^{th} CU, the prediction information of the first N-1 coding blocks are not added to the merging candidate list or the probable intra prediction mode list for N^{th} CU. If a merging candidate list or a probable intra prediction mode list for N^{th} CU is already generated, a decoder can remove the prediction information of the first N-1 coding blocks from the merging candidate list or the probable intra prediction mode list for N^{th} coding block.

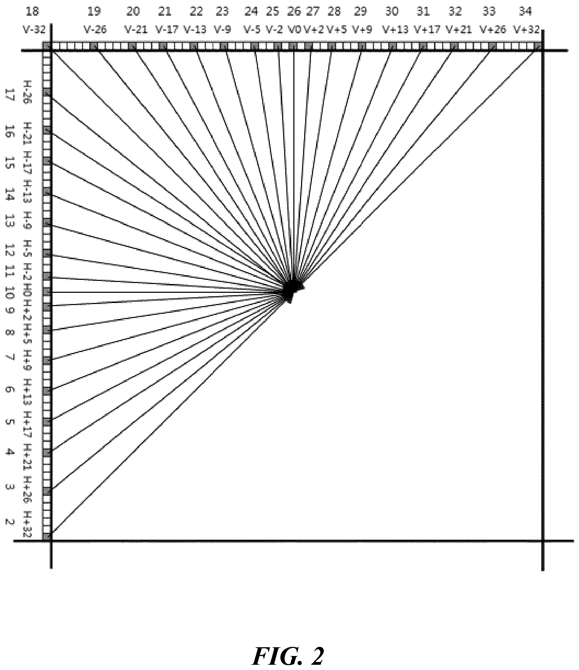

The intra prediction modes use the previously decoded boundary samples from spatially neighboring blocks in order to predict a new prediction block (PB). The neighboring blocks have been previously decoded from within the same picture. High efficiency video coding (HEVC) specifies 33 directional modes for intra prediction compared with the 8 directional modes for intra prediction specified by H.264/MPEG-4 AVC. The 33 directional modes as shown in FIG. 2, are also called as angular modes. In FIG. 2, the angular modes are indexed from 2 to 34. Directions may cover angles from near-horizontal through near-diagonal to near-vertical. Each mode has associated a displacement parameter d, where the value of d indicates the numeric part which is the pixel's displacement expressed in 1/32 pixel fractions of accuracy, and H and V indicate the horizontal and vertical directionalities. The modes 10 and 26 are known as pure horizontal predication and pure vertical predication, respectively. HEVC also specifies DC intra prediction and planar prediction modes. The DC intra prediction mode generates a mean value by averaging reference samples and can be used for flat surfaces. The DC intra prediction mode is known as mode 1. The planar prediction mode in HEVC supports all block sizes defined in HEVC while the planar prediction mode in H.264/MPEG-4 AVC is limited to a block size of 16x 16 pixels. The planar prediction mode is known as mode 0. Therefore, there are total 35 intra prediction modes in HEVC.

For example, most probable intra prediction modes for the first N-1 coding blocks are intra prediction modes 1,8, and 17. Then the intra prediction modes 1,8, and 17 are excluded from most probable intra prediction modes for the last coding block, i.e., the N^{th} coding block. Therefore, there is no need to transmit intra prediction modes 1, 8, and 17 for the last coding block. Correspondingly, signaling bits of prediction information for the last coding block in depth K+1 may be reduced.

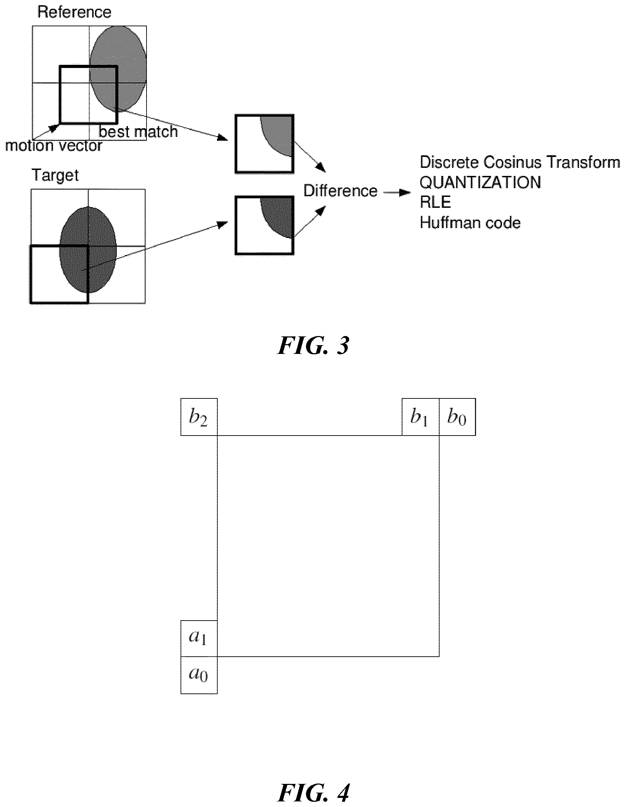

Inter coding uses temporal prediction. Temporal prediction with motion compensation is used to remove temporal redundancy between successive pictures. The temporal prediction with motion compensation algorithm may utilize one or two reference pictures to encode a particular picture. A reference picture is a picture that has already been encoded. By comparing the particular picture that is to be encoded with one of the reference pictures, the temporal prediction with motion compensation algorithm can take advantage of the temporal redundancy that exists between the reference picture and the particular picture that is to be encoded and encode the picture with a higher amount of compression than if the picture were encoded without using the temporal prediction with motion compensation algorithm. One of the reference pictures may be in the backward direction in relation to the particular picture that is to be encoded. The other reference picture is in the forward direction in relation to the particular picture that is to be encoded. List 0 may represent past picture reference, and List 1 may represent future pictures reference. As shown in FIG. 3, if the encoder succeeds on its search to find a reference block, the block could be encoded by a vector, known as motion vector (MV), which points to the position of the matching block at the reference frame. The process of motion vector determination is called motion estimation. In most cases, the block found is likely not an exact match to the block it is encoding. This is why the encoder will compute the differences between them. Those residual values are known as the prediction error and need to be transformed and sent to the decoder. To sum up, if the encoder succeeds in finding a matching block on a reference frame, it will obtain a motion vector pointing to the matched block and a prediction error. Using both elements, the decoder will be able to recover the raw pixels of the block.

There are three types of modes for the inter prediction, namely skip mode, merge mode and inter mode. For each coding unit (CU), a skip flag is coded to indicate whether the current CU uses skip mode. If the current CU used skip mode, a number of parallel motion predictors are constructed as a merging candidate list for the skip mode. If it is merge mode, a merging candidate list for merge mode is constructed similar as the merge list for skip mode. If the current CU is not coded as merge mode, it is coded as a traditional inter mode.

A merging candidate list may be generated by utilizing the MV information from neighbor coding blocks, and the index of best candidate from MERGE list is signaled to the decoder. Reference CUs used in merging candidate selection process are shown in FIG. 4. Reference CUs are checked one-by-one to determine if the Reference CUs are qualified for merging candidate. The predefined checking order in HEVC standard is: a1, b1, b0, a0, b2, TBR (temporal bottom right collocated candidate), TCT (temporal central collocated candidate), and Zero MV.

For example, if the first N-1 coded CUs are coded using inter prediction and have the same inter prediction direction, reference frame(s) and motion vector(s), in the merging candidate list construction process, any merging candidate that has the same inter prediction direction, reference frame(s) and motion vector(s) as those used by the first N-1 coded CUs are excluded to be added into the merging candidate list. Correspondingly, signaling bits of prediction information for the last coding block in depth K+1 may be reduced.

This present disclosure provides a set of methods to compress/decompress the last coding or prediction block which is partitioned from a parent coding or prediction block by a QT, TT or BT split, taking into consideration of the coding information (e.g., intra prediction mode, motion vector, reference picture index and so on) of other coding or prediction blocks in the same depth, i.e., partitioned from the same parent coding or prediction block.

In one method, if all coding or prediction blocks in depth K+1 are leaf nodes and the first N-1 coding blocks in depth K+1 have the same (or similar with difference less than a small threshold) prediction information, the prediction information of the first N-1 coding blocks is not allowed for the last coding block in depth K+1. As a result, as an approach, there is no need to signal (code) eliminated prediction mode or information and thus the less signaling bits are needed for the current block. As another alternative approach, other prediction modes or prediction information may be included and signaled without additional bits.

In another method, if all coding or prediction blocks in depth K+1 are leaf nodes and the first N-1 coding blocks in depth K+1 have the same (or similar with difference less than a small threshold) prediction information, the prediction information of the first N-1 coding blocks is excluded from the most probable intra prediction modes of the last coding block if the last block is intra coded, or from the merging candidate list of the last coding block if the last coding block is inter coded. As a result, other different intra prediction modes may be included in the most probable mode list, or other neighboring motion vectors may be included in the merging candidate list without using additional signaling bits.

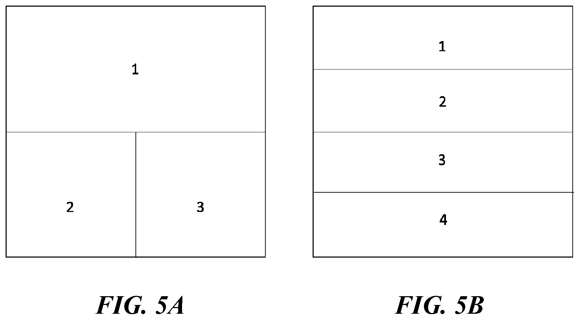

Note that QT, TT and BT are types of trees used in this disclosure for illustration purpose. The methods that are described in this disclosure can be applied to other types of split trees or partitions. One example is the "T-shape" partition as shown in FIG. 5A. In this example, if partition 1 and 2 share the same prediction information, the partition 3 will not be allowed to use the same prediction information; or the same prediction information will not be included in such as intra most probable mode list or inter merging candidate list. Another example is the "multiple row" partition shown in FIG. 5B. In this example, if partition 1, 2 and 3 share the same prediction information, the partition 4 will not be allowed to use the same prediction information; or the same prediction information will not be included in such as intra most probable mode list or inter merging candidate list. Same methods applied to "multiple column" partition or other partition types.

The present disclosure presents a set of methods to compress/decompress the last coding or prediction block which is partitioned from a parent coding or prediction block by a QT, TT or BT split, which includes the following five steps in a first embodiment, performed by a decoder, as shown in FIG. 6. Process 600 is an example for the decoder's processing. Similarly, an encoder does the vice versa process.

The decoder receives bit streams (for example, large coding block) from an encoder. Then at block 610, the larger coding block (e.g., coding tree unit (CTU)) is partitioned into a plurality of smaller coding or prediction blocks (e.g., coding units (CUs)) based on coding tree information, where the coding tree information includes QT, QTBT or QT-BT/TT, or other types information.

At block 620, if the current CU in depth K+1 is the last coded CU partitioned from a parent CU in depth K, and all of the N CUs split from the parent CU are leaf nodes and all of the N CUs use intra prediction, the prediction information of the first N-1 coded CUs are compared to identify whether the first N-1 coded CUs have the same first intra prediction mode. More specifically, DC mode, planar mode and every angular prediction mode are considered as different intra prediction modes. If the first N-1 coded CUs do not have the same intra prediction mode, then the encoder may adopt conventional method at block 630.

At block 640, if the first N-1 coded CUs have the same first intra prediction mode (PA), the first intra prediction mode (PA) is excluded from most probable intra prediction modes for the last coded CU. A probable intra prediction mode list includes those most probable intra prediction modes. One of the remaining mode may be moved into the most probably mode list. The PA may be used as one of the remaining modes or, as an alternative, if the first N-1 coded CUs have the same intra prediction mode PA, it is not allowed to use the prediction mode PA for the last coded CU at all.

At block 650, derive a second intra prediction mode for the last coded CU from the probable intra prediction modes, and generate intra prediction samples according to the second intra prediction mode.

At block 660, generate residual for the last coded CU and obtain reconstructed samples of the last coded CU by adding the residual and prediction samples.

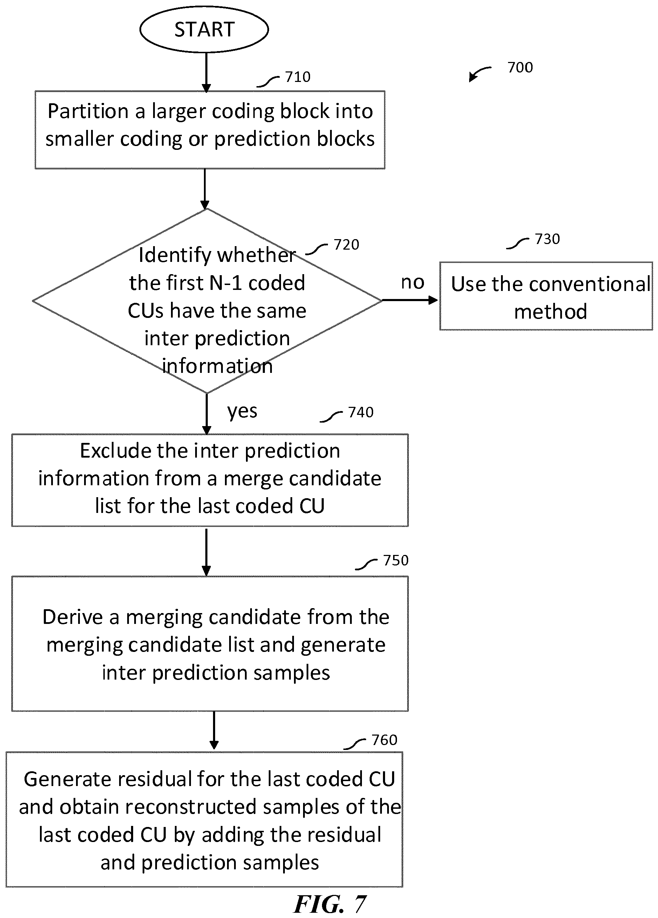

The present disclosure presents a set of methods to compress/decompress the last coding or prediction block which is partitioned from a parent coding or prediction block by a QT, TT or BT split, which includes the following five steps in an embodiment, performed by a decoder, as shown in FIG. 7. Process 700 is an example for the decoder's processing. Similarly, an encoder does the vice versa process.

The decoder receives bit streams (for example, large coding block) from an encoder. Then at block 710, the larger coding block (e.g., coding tree unit (CTU)) is partitioned into a plurality of smaller coding or prediction blocks (e.g., coding units (CUs)) based on coding tree information, where the coding tree information may include QT, QTBT or QT-BT/TT, or other types information

At block 720, if the current CU in depth K+1 is the last coded CU partitioned from a parent CU in depth K, and all of the N CUs split from the parent CU are leaf nodes and all of the first N-1 coded CUs use inter prediction and the last coded CU uses skip or merge mode, the prediction information of the first N-1 coded CUs are compared to identify whether the first N-1 coded CUs have the same inter prediction information.

More specifically, if the N CUs are coded using inter prediction, the inter prediction direction, reference frame index and motion vector information of the first N-1 coded CUs are compared. If all of the inter prediction direction, reference frame index and motion vector information of the first N-1 coded CUs are the same, the N-1 CUs are considered to have the same inter prediction information.

In more details, if a CU uses skip or merge mode, the motion information for inter prediction of the CU is copied from motion information of neighboring blocks of the CU, and there is no need to signal additional inter prediction parameters like the inter prediction direction, reference frame index, and motion vector difference.

At block 730, if the first N-1 coded CUs do not have the same inter prediction information, the decoder may use the conventional method.

At block 740, if the first N-1 coded CUs have the same inter prediction information and the last coded CU uses skip or merge mode, the inter prediction information is excluded from a merging candidate list (or merging candidate list) for the last coded CU.

More specifically, if the first N-1 coded CUs are coded using inter prediction and have the same inter prediction direction, reference frame(s) and motion vector(s), in the merging candidate list construction process, any merging candidate that has the same inter prediction direction, reference frame(s) and motion vector(s) as those used by the first N-1 coded CUs are not allowed to be added into the merging candidate list.

At block 750, derive a merging candidate from the merging candidate list and generate inter prediction samples according to the merging candidate.

At block 760, generate residual for the last coded CU and obtain reconstructed samples of the last coded CU by adding the residual and the inter prediction samples.

This present disclosure provides a video processing system, including an encoder and a decoder. The encoder is configured to send a coding block to the decoder. The decoder is configured to perform the methods described above, such as process 600 and process 700.

Relative to known video coding, the present disclosure considers the intra prediction mode and/or motion information of first N-1 coding or prediction blocks partitioned from a QT, TT or BT split when deciding the intra prediction mode and/or motion information of the last coding or prediction block. As a result, this present disclosure increase the accuracy of image prediction for the last coding or prediction block

Quad-tree is a key feature of International Telecommunication Union (ITU) Telecommunication Standardization Sector (ITU-T) H.265 video coding standard (most recently dated December 2016). Intra prediction, inter prediction, de-quantization, inverse transform and parsing of syntax are basic processing of video coding, and additional details are found in the H.265 video coding standard.

QTBT was introduced in J. An, Y.-W. Chen, K. Zhang, H. Huang, Y.-W. Huang, and S. Lei, "Block partitioning structure for next generation video coding," ITU-T SG16 Doc. COM16-C966, Sept. 2015.

QT-BT/TT was introduced in X. Li et al., Multi-Type-Tree, JVET-D0117, Oct. 2016

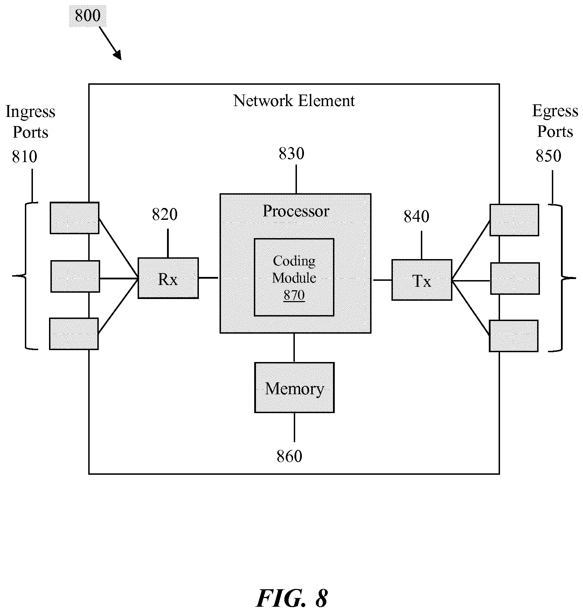

FIG. 8 is a schematic diagram of a network element 800 according to an embodiment of the disclosure. The network element 800 is suitable for implementing the disclosed embodiments as described herein. The network element 800 may be the encoder or the decoder to perform the methods described above. The network element 800 comprises ingress ports 810 and receiver units (Rx) 820 for receiving data; a processor, logic unit, or central processing unit (CPU) 830 to process the data; transmitter units (Tx) 840 and egress ports 850 for transmitting the data; and a memory 860 for storing the data. The network element 800 may also comprise optical-to-electrical (OE) components and electrical-to-optical (EO) components coupled to the ingress ports 810, the receiver units 820, the transmitter units 840, and the egress ports 850 for egress or ingress of optical or electrical signals.

The processor 830 is implemented by hardware and software. The processor 830 may be implemented as one or more CPU chips, cores (e.g., as a multi-core processor), field-programmable gate arrays (FPGAs), application specific integrated circuits (ASICs), and digital signal processors (DSPs). The processor 830 is in communication with the ingress ports 810, receiver units 820, transmitter units 840, egress ports 850, and memory 860. The processor 830 includes a coding module 870. The coding module 870 implements the disclosed embodiments described above. For instance, the coding module 870 implements the methods of compressing/decompressing the last coding or prediction block. The inclusion of the coding module 870 therefore provides a substantial improvement to the functionality of the network element 800 and effects a transformation of the network element 800 to a different state. Alternatively, the coding module 870 is implemented as instructions stored in the memory 860 and executed by the processor 830.

The memory 860 comprises one or more disks, tape drives, and solid-state drives and may be used as an over-flow data storage device, to store programs when such programs are selected for execution, and to store instructions and data that are read during program execution. The memory 860 may be volatile and/or non-volatile and may be read-only memory (ROM), random-access memory (RAM), ternary content-addressable memory (TCAM), and/or static random-access memory (SRAM).

By considering the intra prediction mode and/or motion information of first N-1 coding or prediction blocks partitioned from a QT, TT or BT split when deciding the intra prediction mode and/or motion information of the last coding or prediction block, this present disclosure increase the accuracy of image prediction for the last coding or prediction block.

While several embodiments have been provided in the present disclosure, it should be understood that the disclosed systems and methods might be embodied in many other specific forms The present examples are to be considered as illustrative and not restrictive, and the intention is not to be limited to the details given herein. For example, the various elements or components may be combined or integrated in another system.

In addition, techniques, systems, subsystems, and methods described and illustrated in the various embodiments as discrete or separate may be combined or integrated with other systems, modules, techniques, or methods. Other items shown or discussed as coupled or directly coupled or communicating with each other may be indirectly coupled or communicating through some interface, device, or intermediate component whether electrically, mechanically, or otherwise.

## Claims

1. A predictive decoding method performed by a decoder on encoded video data, comprising:
partitioning a coding block into N coding units (CUs) based on coding tree information; identifying whether first N-1 coded CUs of the coding block have the same prediction information; and **characterized in**:
excluding a first intra prediction mode from a probable intra prediction mode list for the CU of the coding block when all of the first N-1 CUs have the first intra prediction mode.

2. The method of claim 1, wherein the method further comprises:
adding a remaining mode to the probable intra prediction mode list, wherein the remaining mode is different from the first intra prediction mode.

3. The method of claim 1, wherein the method further comprises:
deriving a second intra prediction mode for the N^{th} CU from the probable intra prediction mode list;
generating intra prediction samples according to the second intra prediction mode;
generating residual for the N^{th} CU; and
obtaining reconstructed samples of the N^{th} CU by adding the residual and the intra prediction samples.

4. The method of claim 1, wherein, when
the prediction information includes inter prediction information, the identifying further comprises: identifying whether the first N-1 coded CUs have same inter prediction information, the inter prediction information includes inter prediction direction, reference frame index and motion vector information; and
wherein the method further comprises: excluding the inter prediction information from the merging candidate list for the N^{th} CU when the first N-1 CUs have the same prediction information.

5. The method of claim 4, wherein the N^{th} CU uses skip or merge mode, and all of the first N-1 CUs use inter prediction.

6. The method of claim 4, wherein the method further comprises:
deriving a merging candidate for the N^{th} CU from the merging candidate list;
generating inter prediction samples according to the merging candidate;
generating residual for the N^{th} CU; and
obtaining reconstructed samples of the N^{th} CU by adding the residual and the inter prediction samples.

7. The method of any one of claims 1 to 3, wherein the excluding the first intra prediction mode from a probable intra prediction mode list for N^{th} CU comprises:
if the excluding of the first intra prediction mode is realized during generating the probable intra prediction mode list for N^{th} CU, the first intra prediction mode of the first N-1 coding blocks is not added to the probable intra prediction mode list for the N^{th} CU; and
if the probable intra prediction mode list for N^{th} CU is already generated when the excluding of the first intra prediction mode is realized, removing the first intra prediction mode of the first N-1 coding blocks from the probable intra prediction mode list for the N^{th} coding block.

8. A decoder device for performing predictive decoding of encoded video data, comprising:
a non-transitory memory storage comprising instructions; and
one or more processors in communication with the memory, wherein the one or more processors when executing the instructions, are configured to:
partition a coding block into N coding unites (CUs) based on coding tree information; identify whether first N-1 coded CUs of the coding block have the same prediction information; and:
exclude a first intra prediction mode from a probable intra prediction mode list for the N^{th} CU of the coding block when all of the first N-1 CUs have the first intra prediction mode.

9. The device of claim 8, wherein the one or more processors, when executing the instructions, are further configured to:
add a remaining mode to the probable intra prediction mode list, wherein the remaining mode is different from the first intra prediction mode.

10. The device of claim 8, wherein the one or more processors, when executing the instructions, are further configured to:
derive a second intra prediction mode for the N^{th} CU from the probable intra prediction mode list;
generate intra prediction samples according to the second intra prediction mode;
generate residual for the N^{th} CU; and
obtain reconstructed samples of the N^{th} CU by adding the residual and the intra prediction samples.

11. The device of claim 7, wherein,
the prediction information includes inter prediction information, the one or more processors when executing the instructions, are further configured to:
identify whether the first N-1 coded CUs have same inter prediction information, the inter prediction information includes inter prediction direction, reference frame index and motion vector information; and
exclude the inter prediction information from the merging candidate list for the N^{th} CU when the first N-1 CUs have same prediction information.

12. The device of claim 11, wherein the N^{th} CU uses skip or merge mode, and all of the first N-1 CUs use inter prediction.

13. The device of claim 11, wherein the one or more processors, when executing the instructions, are further configured to:
derive a merging candidate for the N^{th} CU from the merging candidate list;
generate inter prediction samples according to the merging candidate;
generate residual for the N^{th} CU; and
obtain reconstructed samples of the N^{th} CU by adding the residual and the inter prediction samples.

14. The device of any one of claims 8 to 10, wherein the one or more processors when executing the instructions, are further configured to:
if the excluding of the first intra prediction mode is realized during generating the probable intra prediction mode list for Nth CU, not add the first intra prediction mode of the first N-1 coding blocks to the probable intra prediction mode list for the Nth CU; and
if the probable intra prediction mode list for Nth CU is already generated when the excluding of the first intra prediction mode is realized, remove the first intra prediction mode of the first N-1 coding blocks from the probable intra prediction mode list for the Nth coding block.

15. A non-transitory computer-readable medium storing computer instructions, that when executed by one or more processors, cause the one or more processors to perform any one of claims 1-7.

## Patentansprüche

1. Prädiktives Decodierungsverfahren, das durch einen Decodierer an codierten Videodaten durchgeführt wird, das Folgendes umfasst:
Partitionieren eines Codierungsblocks in N Codierungseinheiten (coding units - CUs) basierend auf Codierungsbauminformationen;
Identifizieren, ob erste N-1 codierte CUs des Codierungsblocks die gleichen Prädiktionsinformationen aufweisen; und **gekennzeichnet durch**:
Ausschließen eines ersten Intraprädiktionsmodus aus einer wahrscheinlichen Intraprädiktionsmodusliste für die N^{te} CU des Codierungsblocks, wenn alle der ersten N-1 CUs den ersten Intraprädiktionsmodus aufweisen.

2. Verfahren nach Anspruch 1, wobei das Verfahren ferner Folgendes umfasst:
Hinzufügen eines verbleibenden Modus zu der wahrscheinlichen Intraprädiktionsmodusliste, wobei sich der verbleibende Modus von dem ersten Intraprädiktionsmodus unterscheidet.

3. Verfahren nach Anspruch 1, wobei das Verfahren ferner Folgendes umfasst:
Ableiten eines zweiten Intraprädiktionsmodus für die N^{te} CU aus der wahrscheinlichen Intraprädiktionsmodusliste;
Erzeugen von Intraprädiktionsabtastwerten gemäß dem zweiten Intraprädiktionsmodus;
Erzeugen einer Restgröße für die N^{te} CU; und
Erhalten von rekonstruierten Abtastwerten der N^{ten} CU durch Hinzufügen der Restgröße und der Intraprädiktionsabtastwerte.

4. Verfahren nach Anspruch 1, wobei, wenn die Prädiktionsinformationen Interprädiktionsinformationen einschließen, das Identifizieren ferner Folgendes umfasst: Identifizieren, ob die ersten N-1 codierten CUs gleiche Interprädiktionsinformationen aufweisen, wobei die Interprädiktionsinformationen Interprädiktionsrichtung, Referenzrahmenindex und Bewegungsvektorinformationen einschließen; und
wobei das Verfahren ferner Folgendes umfasst: Ausschließen der Interprädiktionsinformationen von der Zusammenführungskandidatenliste für die N^{te} CU, wenn die ersten N-1 CUs die gleichen Prädiktionsinformationen aufweisen.

5. Verfahren nach Anspruch 4, wobei die N^{te} CU einen Überspring- oder Zusammenführungsmodus verwendet und alle der ersten N-1 CUs Interprädiktion verwenden.

6. Verfahren nach Anspruch 4, wobei das Verfahren ferner Folgendes umfasst:
Ableiten eines Zusammenführungskandidaten für die N^{te} CU von der Zusammenführungskandidatenliste;
Erzeugen von Interprädiktionsabtastwerten gemäß dem
Zusammenführungskandidaten;
Erzeugen einer Restgröße für die N^{te} CU; und
Erhalten von rekonstruierten Abtastwerten der N^{ten}CU durch Hinzufügen der Restgröße und der Interprädiktionsabtastwerte.

7. Verfahren nach einem der Ansprüche 1 bis 3, wobei das Ausschließen des ersten Intraprädiktionsmodus aus einer wahrscheinlichen Intraprädiktionsmodusliste für die N^{te} CU Folgendes umfasst:
falls das Ausschließen des ersten Intraprädiktionsmodus während des Erzeugens der wahrscheinlichen Intraprädiktionsmodusliste für die N^{te} CU realisiert wird, der erste Intraprädiktionsmodus der ersten N-1 Codierungsblöcke nicht zu der wahrscheinlichen Intraprädiktionsmodusliste für die N^{te} CU hinzugefügt wird; und
falls die wahrscheinliche Intraprädiktionsmodusliste für die N^{te} CU bereits erzeugt wird, wenn das Ausschließen des ersten Intraprädiktionsmodus realisiert wird, Entfernen des ersten Intraprädiktionsmodus der ersten N-1 Codierungsblöcke aus der wahrscheinlichen Intraprädiktionsmodusliste für den N^{ten} Codierungsblock.

8. Decodiervorrichtung zum Durchführen einer prädiktiven Decodierung von codierten Videodaten, die Folgendes umfasst:
eine nicht flüchtige Memoryspeicherung, die Anweisungen umfasst; und
einen oder mehrere Prozessoren in Kommunikation mit dem Memory, wobei der eine oder die mehreren Prozessoren bei einem Ausführen der Anweisungen, für Folgendes konfiguriert sind:
Partitionieren eines Codierungsblocks in N Codierungseinheiten (CUs) basierend auf Codierungsbauminformationen;
Identifizieren, ob erste N-1 codierte CUs des Codierungsblocks die gleichen Prädiktionsinformationen aufweisen; und
Ausschließen eines ersten Intraprädiktionsmodus aus einer wahrscheinlichen Intraprädiktionsmodusliste für die N^{te} CU des Codierungsblocks, wenn alle der ersten N-1 CUs den ersten Intraprädiktionsmodus aufweisen.

9. Vorrichtung nach Anspruch 8, wobei der eine oder die mehreren Prozessoren bei dem Ausführen der Anweisungen, ferner für Folgendes konfiguriert sind: Hinzufügen eines verbleibenden Modus zu der wahrscheinlichen Intraprädiktionsmodusliste, wobei sich der verbleibende Modus von dem ersten Intraprädiktionsmodus unterscheidet.

10. Vorrichtung nach Anspruch 8, wobei der eine oder die mehreren Prozessoren bei dem Ausführen der Anweisungen, ferner für Folgendes konfiguriert sind:
Ableiten eines zweiten Intraprädiktionsmodus für die N^{te} CU aus der wahrscheinlichen Intraprädiktionsmodusliste;
Erzeugen von Intraprädiktionsabtastwerten gemäß dem zweiten Intraprädiktionsmodus;
Erzeugen der Restgröße für die N^{te} CU; und
Erhalten von rekonstruierten Abtastwerten der N^{ten} CU durch Hinzufügen der Restgröße und der Intraprädiktionsabtastwerte.

11. Vorrichtung nach Anspruch 7, wobei, wenn die Prädiktionsinformationen Interprädiktionsinformationen einschließen, der eine oder die mehreren Prozessoren, bei dem Ausführen der Anweisungen, ferner für Folgendes konfiguriert sind:
Identifizieren, ob die ersten N-1 codierten CUs gleiche Interprädiktionsinformationen aufweisen, wobei die Interprädiktionsinformationen Interprädiktionsrichtung, Referenzrahmenindex und Bewegungsvektorinformationen einschließen; und
Ausschließen der Interprädiktionsinformationen von der Zusammenführungskandidatenliste für die N^{te} CU, wenn die ersten N-1 CUs gleiche Prädiktionsinformationen aufweisen.

12. Vorrichtung nach Anspruch 11, wobei die N^{te} CU den Überspring- oder Zusammenführungsmodus verwendet und alle der ersten N-1 CUs Interprädiktion verwenden.

13. Vorrichtung nach Anspruch 11, wobei der eine oder die mehreren Prozessoren bei dem Ausführen der Anweisungen, ferner für Folgendes konfiguriert sind:
Ableiten eines Zusammenführungskandidaten für die N^{te} CU von der Zusammenführungskandidatenliste;
Erzeugen von Interprädiktionsabtastwerten gemäß dem
Zusammenführungskandidaten;
Erzeugen der Restgröße für die N^{te} CU; und
Erhalten von rekonstruierten Abtastwerten der N^{ten} CU durch Hinzufügen der Restgröße und der Interprädiktionsabtastwerte.

14. Vorrichtung nach einem der Ansprüche 8 bis 10, wobei der eine oder die mehreren Prozessoren bei dem Ausführen der Anweisungen, ferner für Folgendes konfiguriert sind:
falls das Ausschließen des ersten Intraprädiktionsmodus während des Erzeugens der wahrscheinlichen Intraprädiktionsmodusliste für die N^{te} CU realisiert wird, Nichthinzufügen des ersten Intraprädiktionsmodus der ersten N-1 Codierungsblöcke zu der wahrscheinlichen Intraprädiktionsmodusliste für die N^{te} CU; und
falls die wahrscheinliche Intraprädiktionsmodusliste für die N^{te} CU bereits erzeugt wird, wenn das Ausschließen des ersten Intraprädiktionsmodus realisiert wird, Entfernen des ersten Intraprädiktionsmodus der ersten N-1 Codierungsblöcke aus der wahrscheinlichen Intraprädiktionsmodusliste für den N^{ten} Codierungsblock.

15. Nicht flüchtiges computerlesbares Medium, das Computeranweisungen speichert, die bei dem Ausführen durch einen oder mehrere Prozessoren, den einen oder die mehreren Prozessoren veranlassen, einen der Ansprüche 1-7 durchzuführen.

## Revendications

1. Procédé de décodage prédictif mis en œuvre par un décodeur sur des données vidéo codées, comprenant :
le partitionnement d'un bloc de codage en N unités de codage (UC) sur la base d'informations d'arbre de codage ;
le fait d'identifier si les premières N-1 UC codées du bloc de codage ont les mêmes informations de prédiction ; et **caractérisé en ce que** :
l'exclusion d'un premier mode d'intra-prédiction d'une liste de modes d'intra-prédiction probables pour la N^{ième} UC du bloc de codage lorsque toutes les premières N-1 UC ont le premier mode d'intra-prédiction.

2. Procédé selon la revendication 1, le procédé comprenant en outre :
l'ajout d'un mode restant à la liste de modes d'intra-prédiction probables, le mode restant étant différent du premier mode d'intra-prédiction.

3. Procédé selon la revendication 1, le procédé comprenant en outre :
le fait de dériver un second mode d'intra-prédiction pour la N^{ième} UC à partir de la liste de modes d'intra-prédiction probables ;
la génération d'échantillons d'intra-prédiction selon le second mode d'intra-prédiction ;
la génération d'un résidu pour la N^{ième} UC ; et
l'obtention d'échantillons reconstruits de la N^{ième} UC en ajoutant les échantillons résiduels et d'intra-prédiction.

4. Procédé selon la revendication 1, dans lequel, lorsque les informations de prédiction comportent des informations d'inter-prédiction, l'identification comprend en outre : le fait d'identifier si les premières N-1 UC codées ont les mêmes informations d'inter-prédiction, les informations d'inter-prédiction comportent la direction d'inter-prédiction, l'index de trame de référence et des informations de vecteur de mouvement ; et
dans lequel le procédé comprend en outre : l'exclusion des informations d'inter-prédiction de la liste de candidats à la fusion pour la N^{ième} UC lorsque les premières N-1 UC ont les mêmes informations de prédiction.

5. Procédé selon la revendication 4, dans lequel la N^{ième} UC utilise le mode saut ou fusion, et toutes les premières N-1 UC utilisent l'inter-prédiction.

6. Procédé selon la revendication 4, le procédé comprenant en outre :
le fait de dériver un candidat à la fusion pour la N^{ième} UC à partir de la liste de candidats à la fusion ;
la génération d'échantillons d'inter-prédiction en fonction du candidat à la fusion ;
la génération d'un résidu pour la N^{ième} UC ; et
l'obtention d'échantillons reconstruits de la N^{ième} UC en ajoutant les échantillons résiduels et d'inter-prédiction.

7. Procédé selon l'une quelconque des revendications 1 à 3, dans lequel l'exclusion du premier mode d'intra-prédiction d'une liste de modes d'intra-prédiction probables pour la N^{ième} UC comprend :
si l'exclusion du premier mode d'intra-prédiction est réalisée lors de la génération de la liste de modes d'intra-prédiction probables pour la N^{ième} UC, le premier mode d'intra-prédiction des premiers N-1 blocs de codage n'est pas ajouté à la liste de modes d'intra-prédiction probables pour la N^{ième} UC ; et
si la liste de modes d'intra-prédiction probables pour la N^{ième} UC est déjà générée lorsque l'exclusion du premier mode d'intra-prédiction est réalisée, la suppression du premier mode d'intra-prédiction des premiers N-1 blocs de codage de la liste de modes d'intra-prédiction probables pour le N^{ième} bloc de codage.

8. Dispositif décodeur pour effectuer un décodage prédictif de données vidéo codées, comprenant :
une mémoire de stockage non transitoire comprenant des instructions ; et
un ou plusieurs processeurs en communication avec la mémoire, le ou les processeurs, lors de l'exécution des instructions, étant configuré(s) pour :
partitionner un bloc de codage en N unités de codage (UC) sur la base d'informations d'arbre de codage ;
identifier si les premières N-1 UC codées du bloc de codage ont les mêmes informations de prédiction ; et
exclure un premier mode d'intra-prédiction d'une liste de modes d'intra-prédiction probables pour la N^{ième} UC du bloc de codage lorsque toutes les premières N-1 UC ont le premier mode d'intra-prédiction.

9. Dispositif selon la revendication 8, le ou les processeurs, lors de l'exécution des instructions, étant en outre configuré(s) pour :
ajouter un mode restant à la liste de modes d'intra-prédiction probables, le mode restant étant différent du premier mode d'intra-prédiction.

10. Dispositif selon la revendication 8, le ou les processeurs, lors de l'exécution des instructions, étant en outre configuré(s) pour :
dériver un second mode d'intra-prédiction pour la N^{ième} UC à partir de la liste de modes d'intra-prédiction probables ;
générer des échantillons d'intra-prédiction selon le second mode d'intra-prédiction ;
générer un résidu pour la N^{ième} UC ; et
obtenir des échantillons reconstruits de la N^{ième} UC en ajoutant les échantillons résiduels et d'intra-prédiction.

11. Dispositif selon la revendication 7, lorsque les informations de prédiction comportent des informations d'inter-prédiction, le ou les processeurs, lors de l'exécution des instructions, étant en outre configuré(s) pour :
identifier si les premières N-1 UC codées ont les mêmes informations d'inter-prédiction, les informations d'inter-prédiction comportant la direction d'inter-prédiction, l'index de trame de référence et des informations de vecteur de mouvement ; et
exclure les informations d'inter-prédiction de la liste des candidats à la fusion pour la N^{ième} UC lorsque les premières N-1 UC ont les mêmes informations de prédiction.

12. Dispositif selon la revendication 11, dans lequel la N^{ième} UC utilise un mode de saut ou de fusion, et toutes les premières N-1 UC utilisent l'inter-prédiction.

13. Dispositif selon la revendication 11, le ou les processeurs, lors de l'exécution des instructions, étant en outre configuré(s) pour :
dériver un candidat à la fusion pour la N^{ième} UC à partir de la liste de candidats à la fusion ;
générer des échantillons d'inter-prédiction en fonction du candidat à la fusion ;
générer un résidu pour la N^{ième} UC ; et
obtenir des échantillons reconstruits de la N^{ième} UC en ajoutant les échantillons résiduels et d'inter-prédiction.

14. Dispositif selon l'une quelconque des revendications 8 à 10, le ou les processeurs, lors de l'exécution des instructions, étant en outre configuré(s) pour :
si l'exclusion du premier mode d'intra-prédiction est réalisée lors de la génération de la liste de modes d'intra-prédiction probables pour la N^{ième} UC, ne pas ajouter le premier mode d'intra-prédiction des premiers N-1 blocs de codage à la liste de modes d'intra-prédiction probables pour la N^{ième} UC ; et
si la liste de modes d'intra-prédiction probables pour la N^{ième} UC est déjà générée lorsque l'exclusion du premier mode d'intra-prédiction est réalisée, supprimer le premier mode d'intra-prédiction des premiers N-1 blocs de codage de la liste de modes d'intra-prédiction probables pour le N^{ième} bloc de codage.

15. Support non transitoire lisible par ordinateur stockant des instructions informatiques qui, lorsqu'elles sont exécutées par un ou plusieurs processeurs, amènent le ou les processeurs à réaliser l'une quelconque des revendications 1 à 7.
